# EUROPÄISCHE PATENTSCHRIFT

(11) **EP 3 516 419 B1**
(45) Veröffentlichungstag und Bekanntmachung des Hinweises auf die Patenterteilung: **30.09.2020**
(21) Anmeldenummer: 17768791.0
(22) Anmeldetag: 19.09.2017
(51) Int. Cl.: G01S 17/42, G01S 7/481, G01S 17/93

(54) **SENDEEINRICHTUNG FÜR EINE OPTISCHE ERFASSUNGSVORRICHTUNG, OPTISCHE ERFASSUNGSVORRICHTUNG, KRAFTFAHRZEUG SOWIE VERFAHREN**
TRANSMITTING APPARATUS FOR AN OPTICAL SENSING DEVICE, OPTICAL SENSING DEVICE, MOTOR VEHICLE, AND METHOD
SYSTÈME D'ÉMISSION POUR UN DISPOSITIF DE DÉTECTION OPTIQUE, DISPOSITIF DE DÉTECTION OPTIQUE, VÉHICULE AUTOMOBILE AINSI QUE PROCÉDÉ

(30) Priorität: 22.09.2016 DE 102016117851
(43) Veröffentlichungstag der Anmeldung: 31.07.2019
(73) Patentinhaber: Valeo Schalter und Sensoren GmbH, 74321 Bietigheim-Bissingen (DE)
(72) Erfinder: LIN, Lin, 74321 Bietigheim-Bissingen (DE); HORVATH, Peter, 74321 Bietigheim-Bissingen (DE); SCHULER, Thomas, 74321 Bietigheim-Bissingen (DE)
(74) Vertreter: Withopf, Kristina
(86) Internationale Anmeldenummer: PCT/EP2017/073556
(87) Internationale Veröffentlichungsnummer: WO 2018/054870

(56) Entgegenhaltungen:
- EP-A1- 2 680 031
- DE-A1-102009 021 764
- US-A1- 2016 182 788

## Beschreibung

Die Erfindung betrifft eine Sendeeinrichtung für eine optische Erfassungsvorrichtung eines Kraftfahrzeugs, welche dazu ausgelegt ist, einen Umgebungsbereich des Kraftfahrzeugs mittels eines Lichtstrahls abzutasten, und welche eine Lichtquelle zum Aussenden des Lichtstrahls und eine Ablenkeinheit aufweist, wobei die Ablenkeinheit dazu ausgelegt ist, den von der Lichtquelle auf die Ablenkeinheit ausgesendeten Lichtstrahl unter unterschiedlichen Abtastwinkeln in den Umgebungsbereich abzulenken. Die Erfindung betrifft außerdem eine optische Erfassungsvorrichtung für ein Kraftfahrzeug, ein Kraftfahrzeug mit zumindest einer solchen optischen Erfassungsvorrichtung sowie ein Verfahren.

Im vorliegenden Fall richtet sich das Interesse auf optische Erfassungsvorrichtungen für Kraftfahrzeuge, insbesondere auf Laserscanner. Dabei ist es bekannt, einen Umgebungsbereich des Kraftfahrzeugs mittels der optischen Erfassungsvorrichtung zu überwachen. Mittels der Erfassungsvorrichtung können Objekte in dem Umgebungsbereich des Kraftfahrzeugs detektiert werden und Informationen über die erfassten Objekte, beispielsweise eine relative Lage der Objekte zu dem Kraftfahrzeug, einem Fahrerassistenzsystem des Kraftfahrzeugs bereitgestellt werden. Das Fahrerassistenzsystem kann basierend auf diesen Informationen beispielsweise Maßnahmen zur Vermeidung einer Kollision des Kraftfahrzeugs mit dem Objekt einleiten, beispielsweise das Kraftfahrzeug vor der Kollision automatisch abbremsen.

Bei Laserscannern gemäß dem Stand der Technik wird von einer Lichtquelle einer Sendeeinrichtung des Laserscanners, beispielsweise einer Laserdiode, üblicherweise ein Lichtstrahl, beispielsweise ein Laserstrahl, in den Umgebungsbereich ausgesendet und der Umgebungsbereich durch Verändern eines Abtastwinkels beziehungsweise einer Abtastrichtung, entlang welcher der Lichtstrahl abgelenkt wird, abgetastet beziehungsweise abgescannt. Sobald der Lichtstrahl auf ein Objekt in dem Umgebungsbereich trifft, wird zumindest ein Teil des Lichtstrahls an dem Objekt zurück zu dem Laserscanner reflektiert. Eine Empfangseinrichtung des Laserscanners empfängt den reflektierten Teil des Lichtstrahls und bestimmt anhand einer Laufzeit des Lichtstrahls beziehungsweise einer Zeitdauer zwischen dem Aussenden des Lichtstrahls und dem Empfangen des reflektierten Teils des Lichtstrahls einen Abstand des Objekts bezüglich des Kraftfahrzeugs. Unter Kenntnis des Abtastwinkels beim Aussenden des Lichtstrahls kann außerdem eine Orientierung beziehungsweise eine Richtung des Objektes zu dem Kraftfahrzeug bestimmt werden. Aus der Orientierung sowie dem Abstand kann dann die relative Lage des Objekts zu dem Kraftfahrzeug bestimmt werden.

Zum Verändern des Abtastwinkels wird der Lichtstrahl üblicherweise von einer Ablenkeinheit der Sendeeinrichtung abgelenkt. Die Ablenkeinheit ist dabei in der Regel als ein rotierbarer beziehungsweise schwenkbarer Spiegel ausgebildet, welcher den Lichtstrahl in die unterschiedlichen Abtastrichtungen reflektiert, wobei die Abtastrichtung über einen Schwenkwinkel beziehungsweise eine Orientierung des schwenkbaren Spiegels eingestellt wird. Ein Winkelbereich in dem Umgebungsbereich, innerhalb welchem der Lichtstrahl in den Umgebungsbereich abgelenkt wird, bildet dabei ein Sichtfeld der Sendeeinrichtung. Dieses Sichtfeld soll idealerweise einen besonders großen Öffnungswinkel sowie eine bestimmte Soll-Form aufweisen. Zum Vergrößern des Öffnungswinkels existiert daher üblicherweise ein Winkel zwischen dem auf den Spiegel einfallenden Lichtstrahl und dem von dem Spiegel reflektierten Lichtstrahl, also der Abtastrichtung. Dies kann dazu führen, dass eine Ist-Form des Sichtfeldes von der Soll-Form des Sichtfeldes abweicht, also das Sichtfeld der Sendeeinrichtung verzerrt ist. Geringe Verzerrungen können zwar softwareseitig kompensiert werden, indem bestimmte Bereiche des Sichtfeldes nicht genutzt werden. Da diese Bereiche aber dennoch durch den Lichtstrahl ausgeleuchtet werden, weist die optische Erfassungsvorrichtung gemäß dem Stand der Technik eine geringe Effizienz sowie hohe Verluste auf.

In der US 2016/182788 A1 wird ein Laufzeitkamerasystem beschrieben. Das Laufzeitkamerasystem umfasst einen Beleuchter. Der Beleuchter weist eine bewegliche optische Komponente auf, um Licht innerhalb des Sichtfelds der Laufzeitkamera zu scannen, um eine erste Region innerhalb des Sichtfelds zu beleuchten, die größer ist als eine zweite Region innerhalb des Sichtfelds der Laufzeitkamera, die in jedem Augenblick durch das Licht beleuchtet wird. Der Beleuchter umfasst zudem einen Bildsensor, um Tiefenprofilinformationen innerhalb der ersten Region unter Verwendung von Laufzeitmessungstechniken zu bestimmen

In der DE 10 2009 021 764 A1 wird ein Laserscanner mit einer Laserstrahl-Emissionsvorrichtung offenbart, die zum Emittieren mindestens eines Laserstrahls mittels einer Laserstrahl-Emissionsquelle in ein Emissionsbereich ausgebildet ist, wobei der Emissionsbereich einen Scanbereich umfasst. Der Laserscanner weist dabei mindestens einen Spiegel auf, der zumindest teilweise im Emissionsbereich und außerhalb des Scanbereiches derart angeordnet ist, dass die Laserstrahlen in dem Scanbereich (5, 12, reflektiert werden

Es ist Aufgabe der vorliegenden Erfindung, eine Lösung bereitzustellen, wie eine optische Erfassungsvorrichtung für ein Kraftfahrzeug besonders effizient und verlustarm gestaltet werden kann.

Diese Aufgabe wird erfindungsgemäß durch eine Sendeeinrichtung, eine optische Erfassungsvorrichtung, ein Kraftfahrzeug sowie ein Verfahren gemäß den jeweiligen unabhängigen Patentansprüchen gelöst. Vorteilhafte Ausführungsformen der Erfindung sind Gegenstand der abhängigen Patentansprüche, der Beschreibung sowie der Figuren.

Gemäß einer Ausführungsform einer erfindungsgemäßen Sendeeinrichtung für eine optische Erfassungsvorrichtung eines Kraftfahrzeugs ist diese Sendeeinrichtung dazu ausgelegt, einen Umgebungsbereich des Kraftfahrzeugs mittels eines Lichtstrahls abzutasten. Die Sendeeinrichtung kann eine Lichtquelle zum Aussenden des Lichtstrahls und eine Ablenkeinheit aufweisen, wobei die Ablenkeinheit dazu ausgelegt ist, den von der Lichtquelle auf die Ablenkeinheit ausgesendeten Lichtstrahl unter unterschiedlichen Abtastwinkeln in den Umgebungsbereich abzulenken. Insbesondere umfasst die Lichtquelle zum Aussenden des Lichtstrahls zumindest zwei separat ansteuerbare Sendeelemente, welche dazu ausgelegt sind, den Lichtstrahl zum Erzeugen eines vorbestimmten Soll-Sichtfeldes der Sendeeinrichtung unter mit vorbestimmten Sollwerten des Abtastwinkels korrespondierendem Einfallswinkel auf die Ablenkeinheit auszusenden.

Bevorzugt ist eine erfindungsgemäße Sendeeinrichtung für eine optische Erfassungsvorrichtung eines Kraftfahrzeugs dazu ausgelegt, einen Umgebungsbereich des Kraftfahrzeugs mittels eines Lichtstrahls abzutasten. Die Sendeeinrichtung weist eine Lichtquelle zum Aussenden des Lichtstrahls und eine Ablenkeinheit auf, wobei die Ablenkeinheit dazu ausgelegt ist, den von der Lichtquelle auf die Ablenkeinheit ausgesendeten Lichtstrahl unter unterschiedlichen Abtastwinkeln in den Umgebungsbereich abzulenken. Darüber hinaus umfasst die Lichtquelle zum Aussenden des Lichtstrahls zumindest zwei separat ansteuerbare Sendeelemente, welche dazu ausgelegt sind, den Lichtstrahl zum Erzeugen eines vorbestimmten Soll-Sichtfeldes der Sendeeinrichtung unter mit vorbestimmten Sollwerten des Abtastwinkels korrespondierendem Einfallswinkel auf die Ablenkeinheit auszusenden.

Mittels der optischen Erfassungsvorrichtung, welche insbesondere als ein Lidar-System (Lidar-"Light Detection and Ranging") beziehungsweise als ein Laserscanner ausgebildet ist, kann der Umgebungsbereich des Kraftfahrzeugs überwacht werden, indem Objekte beziehungsweise Hindernisse für das Kraftfahrzeug in dem Umgebungsbereich detektiert werden. Dazu weist die optische Erfassungsvorrichtung die Sendeeinrichtung auf, welche die Lichtquelle zum Erzeugen des Lichtstrahls, insbesondere eines Laserstrahls, umfasst. Die Ablenkeinheit lenkt den Lichtstrahl zum Bereitstellen einer Abtastbewegung beziehungsweise Scanbewegung unter den unterschiedlichen Abtastwinkel ab. Dies bedeutet, dass der Lichtstrahl zum Abtasten des Umgebungsbereiches von der Sendeeinrichtung nacheinander beziehungsweise sequenziell in unterschiedliche Abtastrichtungen ausgesendet wird. Mit anderen Worten bedeutet dies, dass der Abtastwinkel, unter welchem der Lichtstrahl in den Umgebungsbereich ausgesendet wird, schrittweise verändert wird. Während einer ersten Messung beziehungsweise zu einem ersten Messzeitpunkt wird der Lichtstrahl in eine erste Abtastrichtung abgelenkt, während einer darauffolgenden zweiten Messung beziehungsweise zu einem zweiten nachfolgenden Messzeitpunkt wird der Lichtstrahl in eine zweite Abtastrichtung abgelenkt, usw. Durch das Ablenken des Lichtstrahls unter den unterschiedlichen Abtastwinkeln wird ein Winkelbereich in dem Umgebungsbereich des Kraftfahrzeugs ausgeleuchtet, welcher das Sichtfeld der Sendeeinrichtung, insbesondere das Sichtfeld der optischen Erfassungsvorrichtung, ausbildet. Der Abtastwinkel kann dabei als ein Winkel angegeben werden, um welchen die Abtastrichtung, horizontal und/oder vertikal, von einer vorbestimmten Richtung, beispielsweise einer Fahrzeuglängsrichtung, abweicht. Mittels der Ablenkeinheit kann der Lichtstrahl insbesondere horizontal und vertikal abgelenkt werden, sodass der Umgebungsbereich rasterartig, also zeilenweise oder spaltenweise, abgetastet beziehungsweise überstrichen wird. Die Ablenkeinheit kann beispielsweise einen schwenkbaren Spiegel, insbesondere einen Mikrospiegelaktor, mit einer planaren, ebenen spiegelnden Oberfläche aufweisen.

Um nun das vorbestimmte Soll-Sichtfeld, welches eine vorbestimmte Soll-Form aufweist, zu erzeugen, sind für die verschiedenen Abtastwinkel Sollwerte, also Soll-Abtastwinkel, vorbestimmt. Vorzugsweise ist eine Ebene des mittels der Sollwerte für den Abtastwinkel erzeugten Soll-Sichtfeldes senkrecht zu einer Hauptabtastrichtung der Sendeeinrichtung rechteckförmig ausgebildet. Das Soll-Sichtfeld weitet sich ausgehend von der Sendeeinrichtung entlang der Hauptabtastrichtung auf und weist eine pyramidenförmige Form auf. Dies bedeutet, dass alle Ebenen parallel zu einer Grundfläche der Pyramide rechteckförmig ausgebildet sind. Zum Bereitstellen der Sollwerte für den Abtastwinkel weist die Lichtquelle die zumindest zwei separat ansteuerbaren Sendeelemente auf. Die Sendeelemente können beispielsweise als LEDs oder Laserdioden ausgebildet sein. Die Sendeelemente können dabei jeweils einen Lichtstrahl beziehungsweise Laserstrahl erzeugen, wobei die Lichtstrahlen in Abhängigkeit von dem den Lichtstrahl erzeugenden Sendeelement in unterschiedliche Richtungen ausgesendet werden und daher unter unterschiedlichen Einfallswinkeln auf die Ablenkeinheit auftreffen. Einer ersten Richtung des Lichtstrahls auf die Ablenkeinheit ist ein erster Einfallswinkel zugeordnet, einer zweiten Richtung ist ein zweiter Einfallswinkel zugeordnet, usw. Durch die Einfallswinkel kann die Abtastrichtung, entlang welcher die Ablenkeinheit den Lichtstrahl ablenkt, beeinflusst werden.

Der Erfindung liegt hierbei die Erkenntnis zugrunde, dass beispielsweise im Falle einer Ablenkeinheit mit einem schwenkbaren Spiegel aufweisend die ebene spiegelnden Oberfläche das Sichtfeld der Sendeeinrichtung durch den schwenkbaren Spiegel, insbesondere durch den Winkel zwischen der üblicherweise festen Einfallsrichtung auf den schwenkbaren Spiegel und der Abtastrichtung, verzerrt werden kann, da die von der planaren Oberfläche bereitgestellten Istwerte des Abtastwinkels nicht den Sollwerten entsprechen. Somit weicht eine Ist-Form des Sichtfeldes von der Soll-Form ab. Eine solche verzerrte Ist-Form kann beispielsweise durch eine fächerförmige Ebene des Sichtfeldes senkrecht zur Hauptabtastrichtung ausgebildet sein. Diese Verzerrung kann durch die zwei separat ansteuerbaren Sendeelemente verhindert oder kompensiert werden, indem der Einfallswinkel auf die Ablenkeinheit an den zu erzeugenden Sollwert für den Abtastwinkel angepasst wird. Anders ausgedrückt, wird der Einfallswinkel so gewählt, dass nach dem Ablenken des Lichtstrahls dieser unter dem jeweiligen Sollwert für den Abtastwinkel ausgesendet wird.

Durch die Lichtquelle mit den separat ansteuerbaren Sendeelementen kann also gewährleistet werden, dass der ausgeleuchtete Winkelbereich voll ausgenutzt werden kann und Objekte in diesem Bereich sicher und zuverlässig detektiert werden können. Mittels der Sendeeinrichtung kann also eine besonders effiziente und verlustarme optische Erfassungsvorrichtung für ein Kraftfahrzeug realisiert werden.

Vorzugsweise weist die Sendeeinrichtung eine Steuereinheit auf, welche dazu ausgelegt ist, für Sollwerte des Abtastwinkels aus einem ersten Wertebereich zumindest ein erstes der Sendeelemente zum Aussenden des Lichtstrahls anzusteuern und für Sollwerte des Abtastwinkels aus einem zweiten Wertebereich zumindest ein zweites der Sendeelemente zum Aussenden des Lichtstrahls anzusteuern. Jeder Wertebereich umfasst dabei zumindest einen Sollwert für den Abtastwinkel. Durch das zumindest eine, aktuell aktive Sendeelement kann also der Einfallswinkel des Lichtstrahls auf die Ablenkeinheit beeinflusst werden und damit eine durch den schwenkbaren Spiegel hervorgerufene Abweichung zwischen dem Sollwert und dem Istwert des Ablenkwinkels bereits beim Aussenden des Lichtstrahls zumindest verringert werden.

Bevorzugt weist die Lichtquelle dabei eine Matrixanordnung von separat ansteuerbaren Sendeelementen auf. Die Lichtquelle weist also ein Array von Sendeelementen, beispielsweise Laserdioden auf, welche beispielsweise zeilenweise beziehungsweise spaltenweise auf einem Träger angeordnet sind. Jedes Sendeelement ist dabei insbesondere über die Zeile, in welcher sich das Sendeelement befindet, und über die Spalte, in welcher sich das Sendeelement befindet, ansprechbar und zur Erzeugung des Lichtstrahls mit dem aktuell geforderten Einfallswinkel ansteuerbar.

Insbesondere ist jedem Sollwert für den Abtastwinkel eine bestimmte Anzahl an Sendeelementen, welche in der Matrixanordnung eine bestimmte Position aufweisen, zugeordnet. Dies bedeutet, dass mehrere Sendeelemente zur Erzeugung desjenigen Lichtstrahls mit dem geforderten Einfallswinkel angesteuert werden. Die jeweiligen Sendeelemente, welche zur Erzeugung des mit dem aktuellen Sollwert für den Abtastwinkel korrespondierenden Einfallswinkels zum Senden angesteuert werden, sind dabei insbesondere benachbart angeordnet, sodass jedem Sollwert für den Einfallswinkel ein damit korrespondierender aktiver Bereich der Matrixanordnung zugeordnet ist. Die aktiven Bereiche weisen dabei insbesondere eine ungleiche Anordnung von Sendeelementen auf. Eine zu den jeweiligen Sollwerten für den Abtastwinkel gehörige Anzahl und Position der Sendeelemente umfassende Ansteuerstrategie für die Sendeelemente kann beispielsweise vorbestimmt und für die Steuereinheit hinterlegt werden. Durch die Matrixanordnung mit den separat beziehungsweise einzeln ansteuerbaren Sendeelementen kann der Lichtstrahl aufweisend den mit dem aktuellen Sollwert für den Abtastwinkel korrespondierenden Einfallswinkel mit einer hohen Genauigkeit erzeugt werden.

Erfindungsgemäß weist die Ablenkeinheit einen schwenkbaren Spiegel auf, welcher dazu ausgelegt ist, den von dem jeweiligen Sendeelement ausgesendeten Lichtstrahl unter dem zu dem jeweiligen Einfallswinkel korrespondierenden Sollwerte für den Abtastwinkel abzulenken. Der schwenkbare Spiegel ist insbesondere als ein Mikrospiegelaktor beziehungsweise MEMS-Spiegel (MEMS - Mikroelektromechanisches System) ausgebildet, welcher eine ebene, planare spiegelnde Oberfläche aufweist. Der schwenkbare Spiegel ist also in einem optischen Pfad beziehungsweise Sendepfad derart angeordnet, dass der von der Lichtquelle unter einem bestimmten Einfallswinkel ausgesendete Lichtstrahl an dem schwenkbaren Spiegel in den Umgebungsbereich reflektiert wird und dabei unter dem mit dem Einfallswinkel korrespondierenden Sollwert für den Abtastwinkel in den Umgebungsbereich reflektiert wird.

Erfindungsgemäß ist vorgesehen, dass die von den Sendeelementen bereitgestellten Einfallswinkel des Lichtstrahls in Abhängigkeit von Schwenkwinkeln des schwenkbaren Spiegels vorgegeben sind. Der schwenkbare Spiegel wird zum Erzeugen der Scanbewegung nacheinander entlang unterschiedlicher Richtung orientiert, indem der Schwenkwinkel schrittweise verändert wird. Dieser schwenkbare Spiegel reflektiert den Lichtstrahl in Abhängigkeit von dem aktuellen Schwenkwinkel beziehungsweise von einer aktuellen Lage des schwenkbaren Spiegels üblicherweise entlang bestimmter Istwerte für den Abtastwinkel. Dabei kann, insbesondere ab einer bestimmten Größe der Sollwerte des Abtastwinkels, der von dem schwenkbaren Spiegel bereitgestellte Istwert von dem Sollwert abweichen. Ohne Kompensierung dieser Abweichung ergibt sich ein gegenüber dem Soll-Sichtfeld verzerrtes Ist-Sichtfeld der Sendeeinrichtung. Diese Verzerrung kann jedoch in vorteilhafter Weise mittels den separat beziehungsweise individuell ansteuerbaren Sendeelementen der Lichtquelle kompensiert werden, indem der Sollwert für den Abtastwinkel über den Einfallswinkel des Lichtstrahls auf den schwenkbaren Spiegel eingestellt wird.

Insbesondere weist der schwenkbare Spiegel eine charakteristische Transferfunktion auf, durch welche eine Verzerrung eines durch den schwenkbaren Spiegel erzeugten Ist-Sichtfeldes bezüglich des Soll-Sichtfeldes in Abhängigkeit von den Schwenkwinkeln des schwenkbaren Spiegels beschrieben ist, wobei die Sendeelemente zum Bereitstellen des jeweiligen Einfallswinkel des Lichtstrahls derart angeordnet sind, dass durch den Einfallswinkel eine Inverse der charakteristischen Transferfunktion bereitgestellt ist. Die Verzerrung ist dabei anhand von einer Abweichung von Formen von Ebenen des Ist-Sichtfeldes und des Soll-Sichtfeldes senkrecht zu einer Hauptabtastrichtung der Sendeeinrichtung bestimmt.

Zum Bestimmen der Ansteuerstrategie, also zum Bestimmen, welches Sendeelement oder welche Sendeelemente pro Messung zum Aussenden des Lichtstrahls angesteuert wird oder werden, wird zunächst die Transferfunktion des schwenkbaren Spiegels bestimmt. Dazu kann beispielsweise das durch die Sendeeinrichtung mit nur einem Sendeelement erzeugte, nicht kompensierte Ist-Sichtfeld erfasst beziehungsweise bestimmt werden. Insbesondere wird dabei die Form der Ebene des Ist-Sichtfeldes senkrecht zu der Hauptabtastrichtung der Sendeeinrichtung bestimmt. Die Ebene des durch den schwenkbaren Spiegel erzeugten Ist-Sichtfeldes ist üblicherweise fächerförmig, während hingegen die Ebene des Soll-Sichtfeldes rechteckförmig ist. Diese Relation beziehungsweise dieser Zusammenhang zwischen der Form des Soll-Sichtfeldes und der Form des Ist-Sichtfeldes kann über die Transferfunktion beschrieben werden, welche insbesondere abhängig von den Schwenkwinkeln des schwenkbaren Spiegels ist. Als die Transferfunktion wird insbesondere also diejenige Funktion bestimmt, durch welche die Soll-Form des Sichtfeldes in die Ist-Form des Sichtfeldes überführt wird. Anders ausgedrückt ergibt die mit der Transferfunktion beaufschlagte Soll-Form des Sichtfeldes die Ist-Form des Sichtfeldes. Unter Kenntnis der Transferfunktion kann die Ansteuerstrategie so bestimmt werden, dass durch die jeweiligen Einfallswinkel die Transferfunktion invertiert wird und somit die Verzerrung kompensiert wird. Die mit der inversen Transferfunktion beaufschlagte Ist-Form des Sichtfeldes ergibt also die Soll-Form des Sichtfeldes. Durch die Bestimmung der Transferfunktion und der inversen Transferfunktion kann also die Ansteuerstrategie für die Lichtquelle in vorteilhafter Weise ideal an den schwenkbaren Spiegel angepasst werden und somit das Soll-Sichtfeld erzeugt werden.

In einer vorteilhaften Ausführungsform der Erfindung weist die Ablenkeinheit zusätzlich einen Freiformspiegel mit einer spiegelnden Freiformfläche zum Reflektieren des von dem schwenkbaren Spiegel reflektieren Lichtstrahls auf, wobei der Freiformspiegel dazu ausgelegt ist, eine Abweichung eines von dem schwenkbaren Spiegel erzeugten Istwertes für den Abtastwinkel von dem Sollwert für den Abtastwinkel zu kompensieren. Dies bedeutet, dass die Ablenkeinheit zusätzlich zu dem schwenkbaren Spiegel den Freiformspiegel aufweist, welcher insbesondere unbeweglich in der Ablenkeinheit angeordnet ist. Gemäß dieser Ausführungsform weist die Ablenkeinheit also den schwenkbaren Spiegel und den Freiformspiegel auf, wobei der Lichtstrahl von der Lichtquelle unter dem jeweiligen Einfallswinkel zunächst auf den schwenkbaren Spiegel ausgesendet wird. Dieser schwenkbare Spiegel reflektiert den Lichtstrahl in Abhängigkeit von dem aktuellen Schwenkwinkel beziehungsweise von einer aktuellen Lage des schwenkbaren Spiegels unter bestimmten Istwerten für den Abtastwinkel, welche, trotz der angepassten Einfallswinkel, von den Sollwerten abweichen können. Dies bedeutet, dass durch das Bereitstellen der unterschiedlichen Einfallswinkel die Abweichung beispielsweise nicht vollständig kompensiert werden kann.

Diese Abweichung kann jedoch in vorteilhafter Weise mittels des Freiformspiegels vollständig kompensiert werden. Der Freiformspiegel ist dabei fest beziehungsweise unbeweglich, also nicht-rotierbar beziehungsweise nicht-schwenkbar, in der Sendeeinrichtung verbaut und weist insbesondere zumindest zwei Oberflächenelemente mit unterschiedlichen Neigungswinkeln auf. Eine Oberfläche des Freiformspiegels ist insbesondere zumindest bereichsweise gewölbt. Der Freiformspiegel kann eine Orientierung des Lichtstrahls für diejenigen Istwerte des Abtastwinkels verändern, welche von den zugehörigen Sollwerten abweichen. Der Freiformspiegel reflektiert den Lichtstrahl dann in den Umgebungsbereich. Der Freiformspiegel kann also in vorteilhafter Weise ebenfalls zur Entzerrung des Sichtfeldes der Sendeeinrichtung beitragen. Das Bereitstellen des Freiformspiegels ist dann besonders vorteilhaft, wenn das durch den schwenkbaren Spiegel verzerrte Sichtfeld nicht allein mittels der Ansteuerstrategie der Lichtquelle entzerrt werden kann.

Alternativ oder zusätzlich kann die Sendeeinrichtung zum Bereitstellen der Sollwerte für den Abtastwinkel zusätzlich ein Linsenelement mit einer Freiformfläche zum Transmittieren des von der Ablenkeinheit abgelenkten Lichtstrahls in den Umgebungsbereich aufweisen, wobei das Linsenelement dazu ausgelegt ist, eine Abweichung des von der Ablenkeinheit erzeugten Istwertes von dem Sollwert für den Abtastwinkel zu kompensieren. Dies bedeutet, dass die Sendeeinrichtung zusätzlich das Linsenelement mit der Freiformfläche, also eine Freiformlinse, aufweist, welche in einem optischen Pfad zwischen der Ablenkeinheit und dem Umgebungsbereich angeordnet ist. Dies bedeutet, dass der von der Ablenkeinheit reflektierte Lichtstrahl vor dem Aussenden in den Umgebungsbereich durch das Linsenelement hindurchtritt, welches optisch transparent für den von der Ablenkeinheit reflektierten Lichtstrahl ist. Das Linsenelement weist dabei eine Freiformfläche auf, deren Oberflächenelemente unterschiedliche Neigungswinkel aufweisen und durch welche die Orientierung des Lichtstrahls, also der Abtastwinkel, eingestellt werden kann. Die Freiformlinse, deren Oberfläche insbesondere zumindest bereichsweise gewölbt ist, kann den Wert des Abtastwinkels beim Transmittieren verändern, falls der Istwert nicht dem Sollwert für den Abtastwinkel entspricht. Dies kann beispielsweise dann vorkommen, wenn die Abweichung zwischen den Istwerten und den Sollwerten nicht vollständig durch die Ansteuerstrategie der Lichtquelle und/oder den Freiformspiegel kompensiert werden kann. Mittels der Freiformlinse kann das Sichtfeld der Sendeeinrichtung also in vorteilhafter Weise ebenfalls entzerrt werden.

Insbesondere sind Neigungswinkel von Oberflächenelementen der Freiformfläche des Freiformspiegels und/oder des Linsenelementes mit den Sollwerten für den Abtastwinkel korrespondierend vorgegeben, wobei jedem Sollwert für den Abtastwinkel ein Oberflächenelement zum Ablenken des Lichtstrahls unter dem jeweiligen Sollwert für den Abtastwinkel zugeordnet ist. Im Falle des Freiformspiegels sind die Neigungswinkel der Oberflächenelemente so gewählt, dass der einfallende Lichtstrahl unter dem jeweiligen, mit der aktuellen Messung korrespondierenden Soll-Abtastwinkels reflektiert wird. Dies bedeutet, dass zum Erzeugen eines bestimmten Sollwertes für den Abtastwinkel, also zum Ablenken des Lichtstrahls entlang der vorbestimmten Soll-Abtastrichtung, der Lichtstrahl an demjenigen Oberflächenelement reflektiert wird, durch dessen Neigungswinkel der Lichtstrahl in die entsprechende Soll-Abtastrichtung abgelenkt werden kann. Im Falle des Linsenelementes beziehungsweise der Freiformlinse ist jedem Sollwert für den Abtastwinkel ein Oberflächenelement der Freiformfläche zum Transmittieren des Lichtstrahls unter dem jeweiligen Sollwert für den Abtastwinkel zugeordnet. Anders ausgedrückt wird zum Bereitstellen eines bestimmten Soll-Abtastwinkels der von der Lichtquelle ausgesendete Lichtstrahl durch das zugehörige Oberflächenelement transmittiert. Durch die Freiformfläche kann also ebenfalls gewährleistet werden, dass der ausgeleuchtete Winkelbereich voll ausgenutzt werden kann und Objekte in diesem Bereich sicher und zuverlässig detektiert werden können. Die Erfindung betrifft außerdem eine optische Erfassungsvorrichtung, insbesondere einen Laserscanner, für ein Kraftfahrzeug zum Überwachen eines Umgebungsbereiches des Kraftfahrzeugs, mit einer erfindungsgemäßen Sendeeinrichtung oder einer Ausführungsform der erfindungsgemäßen Sendeeinrichtung sowie einer Empfangseinrichtung. Die Empfangseinrichtung ist dazu ausgelegt, einen an einem Objekt in dem Umgebungsbereich reflektierten Teil des Lichtstrahls zu empfangen und anhand einer Zeitdauer zwischen dem Aussenden des Lichtstrahls und dem Empfangen des reflektierten Teils des Lichtstrahls einen Abstand des Objektes zu dem Kraftfahrzeug zu bestimmen.

Ein erfindungsgemäßes Kraftfahrzeug umfasst zumindest eine optische Erfassungsvorrichtung. Das Kraftfahrzeug ist insbesondere als ein Personenkraftwagen ausgebildet. Der von der Erfassungsvorrichtung erfasste Abstand des Objektes kann beispielsweise einer Steuereinrichtung eines Fahrerassistenzsystems des Kraftfahrzeugs bereitgestellt werden, welches beispielsweise ein zumindest semiautonomes Fahren des Kraftfahrzeugs ermöglicht. Beispielsweise kann das Kraftfahrzeug von der Steuereinrichtung automatisch abgebremst werden, wenn von der Erfassungseinrichtung erfasst wurde, dass der Abstand des Objekts zu dem Kraftfahrzeug einen vorbestimmten Abstandsschwellwert unterschreitet.

Die Erfindung betrifft außerdem ein Verfahren zum Erzeugen eines Soll-Sichtfeldes für eine Sendeeinrichtung einer optischen Erfassungsvorrichtung eines Kraftfahrzeugs. Gemäß einer Ausführungsform des Verfahrens werden für die Sendeeinrichtung eine Lichtquelle zum Aussenden des Lichtstrahls und eine Ablenkeinheit bereitgestellt, wobei mittels der Ablenkeinheit ein von der Lichtquelle auf die Ablenkeinheit ausgesendeter Lichtstrahl unter unterschiedlichen Abtastwinkeln abgelenkt werden kann. Insbesondere werden zumindest zwei separat ansteuerbare Sendeelemente zum Aussenden des Lichtstrahls für die Lichtquelle bereitgestellt, wobei die Sendeelemente den Lichtstrahl zum Erzeugen eines vorbestimmten Soll-Sichtfeldes der Sendeeinrichtung unter vorbestimmten Sollwerten des Abtastwinkels korrespondierender Einfallswinkel auf die Ablenkeinheit aussenden.

Bevorzugt werden bei dem Verfahren für die Sendeeinrichtung eine Lichtquelle zum Aussenden des Lichtstrahls und eine Ablenkeinheit bereitgestellt, wobei mittels der Ablenkeinheit ein von der Lichtquelle auf die Ablenkeinheit ausgesendeter Lichtstrahl entlang unterschiedlicher Abtastwinkel abgelenkt wird. Darüber hinaus werden zumindest zwei separat ansteuerbare Sendeelemente zum Aussenden des Lichtstrahls für die Lichtquelle bereitgestellt, wobei die Sendeelemente den Lichtstrahl zum Erzeugen eines vorbestimmten Soll-Sichtfeldes der Sendeeinrichtung unter vorbestimmten Sollwerten des Abtastwinkels korrespondierender Einfallswinkel auf die Ablenkeinheit aussenden.

Insbesondere wird die Sendeeinrichtung mit einer Ablenkeinheit aufweisend einen schwenkbaren Spiegel sowie den Freiformspiegel gefertigt. Zum Bestimmen einer Ansteuerstrategie, welche diejenigen Sendeelemente spezifiziert, welche zum Erzeugen des Soll-Sichtfeldes pro Messung angesteuert werden, wird eine Transferfunktion für den schwenkbaren Spiegel bestimmt, welche eine Abweichung einer Form eines Ist-Sichtfeldes der Sendeeinrichtung von einer Form des Soll-Sichtfeldes beschreibt. Die Sendeelemente, welche den Lichtstrahl mit dem zu dem aktuellen Sollwert gehörigen Einfallswinkel erzeugen können, werden dabei so angesteuert, dass durch sie ein Inverses der Transferfunktion bereitgestellt wird.

Die mit Bezug auf die erfindungsgemäße Sendeeinrichtung vorgestellten bevorzugten Ausführungsformen und deren Vorteile gelten entsprechend für die erfindungsgemäße optische Erfassungsvorrichtung, das erfindungsgemäße Kraftfahrzeug sowie für das erfindungsgemäße Verfahren.

Dabei zeigen:
- Fig. 1: eine schematische Darstellung einer Ausführungsform eines erfindungsgemäßen Kraftfahrzeugs;
- Fig. 2: eine schematische Darstellung einer Sendeeinrichtung einer optischen Erfassungsvorrichtung gemäß dem Stand der Technik;
- Fig. 3: eine schematische Darstellung eines Ist-Sichtfeldes der Sendeeinrichtung gemäß Fig. 2;
- Fig. 4: eine schematische Darstellung eines Zusammenhangs zwischen dem Ist-Sichtfeld gemäß Fig. 3 und einem Soll-Sichtfeld;
- Fig. 5: eine schematische Darstellung einer Ausführungsform einer erfindungsgemäßen Sendeeinrichtung für eine optische Erfassungsvorrichtung;
- Fig. 6: eine schematische Darstellung einer Ausführungsform einer erfindungsgemäßen optischen Erfassungsvorrichtung;
- Fig. 7: eine schematische Darstellung einer Ausführungsform einer Lichtquelle der Sendeeinrichtung; und
- Fig. 8: eine schematische Darstellung der Lichtquelle gemäß Fig. 7 beim Aussenden eines Lichtstrahls.

In den Figuren sind gleiche sowie funktionsgleiche Elemente mit den gleichen Bezugszeichen versehen.

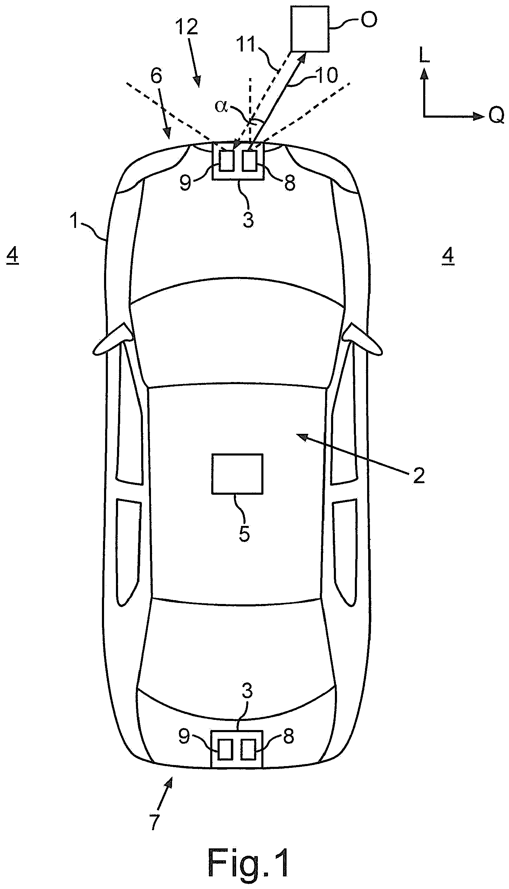

Fig. 1 zeigt ein Kraftfahrzeug 1 gemäß der vorliegenden Erfindung. Im vorliegenden Fall ist das Kraftfahrzeug 1 als ein Personenkraftwagen ausgebildet. Das Kraftfahrzeug 1 umfasst ein Fahrerassistenzsystem 2, welches dazu ausgelegt ist, einen Fahrer des Kraftfahrzeugs 1 beim Führen des Kraftfahrzeugs 1 zu unterstützen. Das Fahrerassistenzsystem 2 umfasst zumindest eine optische Erfassungsvorrichtung 3, welche dazu ausgelegt ist, einen Umgebungsbereich 4 des Kraftfahrzeugs 1 zu überwachen. Insbesondere können mittels der Erfassungsvorrichtung 3 ein Abstand sowie eine Orientierung eines Objektes O in dem Umgebungsbereich 4 des Kraftfahrzeugs 1 erfasst werden und beispielsweise einer Steuereinrichtung 5 des Fahrerassistenzsystems 2 bereitgestellt werden. Die Steuereinrichtung 5 kann das Kraftfahrzeug 1 zur Kollisionsvermeidung beispielsweise automatisch abbremsen, falls der Abstand des Objektes O einen vorbestimmten Schwellwert unterschreitet. Im vorliegenden Fall weist das Fahrerassistenzsystem 2 zwei Erfassungsvorrichtungen 3 auf, wobei eine erste Erfassungsvorrichtung 3 in einem Frontbereich 6 des Kraftfahrzeugs 1 angeordnet ist und dazu dient, den Umgebungsbereich 4 vor dem Kraftfahrzeug 1 zu überwachen, und eine zweite Erfassungsvorrichtung 3 in einem Heckbereich 7 des Kraftfahrzeugs 1 angeordnet ist und dazu dient, den Umgebungsbereich 4 hinter dem Kraftfahrzeug 1 zu überwachen. Es können auch weitere Erfassungsvorrichtungen 3, beispielsweise in Seitenbereichen des Kraftfahrzeugs 1, vorgesehen sein.

Die optische Erfassungsvorrichtung 3 ist im vorliegenden Fall als ein Laserscanner ausgebildet und weist eine Sendeeinrichtung 8 sowie eine Empfangseinrichtung 9 auf. Die Sendeeinrichtung 8 sendet einen Lichtstrahl 10 in den Umgebungsbereich 4 aus und die Empfangseinrichtung 9 empfängt einen an dem Objekt O reflektierten Teil 11 des Lichtstrahls 10. Die Empfangseinrichtung 9 kann anhand einer Laufzeit zwischen dem Aussenden des Lichtstrahls 10 und dem Empfangen des reflektierten Teils 11 des Lichtstrahls 10 den Abstand des Objektes O erfassen. Der Lichtstrahl 10 wird dabei nacheinander beziehungsweise schrittweise unter verschiedenen Abtastwinkeln α ausgesendet. Dadurch wird der Umgebungsbereich 4 mittels des Lichtstrahls 10 rasterartig abgetastet beziehungsweise gescannt. Gemäß Fig. 1 sind horizontale Komponenten des Abtastwinkels α in einer von einer Fahrzeuglängsrichtung L und einer Fahrzeugquerrichtung Q aufgespannten Horizontalebene gezeigt. Die horizontale Komponente des Abtastwinkels α sowie eine hier nicht gezeigte vertikale Komponente des Abtastwinkels α in einer von der Fahrzeuglängsrichtung L und einer Fahrzeughochrichtung aufgespannten Ebene sind der Sendeeinrichtung 8 bekannt, wodurch auch eine Orientierung beziehungsweise Richtung des Objektes O relativ zum Kraftfahrzeug 1 bekannt ist. Ein Winkelbereich 12 in dem Umgebungsbereich 4, welcher mittels des in unterschiedliche Abtastrichtungen orientierten Lichtstrahls 10 ausgeleuchtet wird, bildet ein Sichtfeld der Sendeeinrichtung 8.

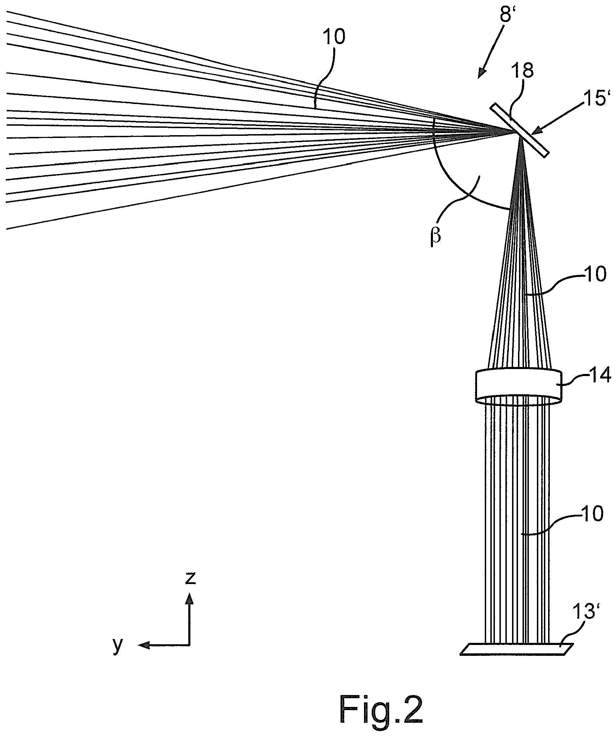

Fig. 2 zeigt eine Sendeeinrichtung 8' gemäß dem Stand der Technik. Die Sendeeinrichtung 8' weist eine Lichtquelle 13' auf, welche dazu ausgelegt ist, den Lichtstrahl 10 auszusenden. Außerdem weist die Sendeeinrichtung 8' einen Kollimator 14 auf, welcher den Lichtstrahl 10 bündelt. Der gebündelte Lichtstrahl 10 wird auf eine Ablenkeinheit 15' bestehend aus einem schwenkbaren Spiegel 18, welcher hier als ein Mikrospiegelaktor beziehungsweise MEMS-Spiegel ausgebildet ist, ausgesendet. Der schwenkbare Spiegel 18 dient dazu, den Lichtstrahl 10 unter den unterschiedlichen Abtastwinkeln α in den Umgebungsbereich 4 abzulenken. Zum Erzeugen des Sichtfeldes, welches einen besonders großen Öffnungswinkel, beispielsweise 150°aufweist, existiert ein Winkelunterschied β zwischen einer Einfallsrichtung des Lichtstrahls 10, welche hier entlang der z-Richtung orientiert ist, und der Abtastrichtung, welche hier entlang der y-Richtung orientiert ist: Der Winkel β beträgt hier beispielsweise 90°.

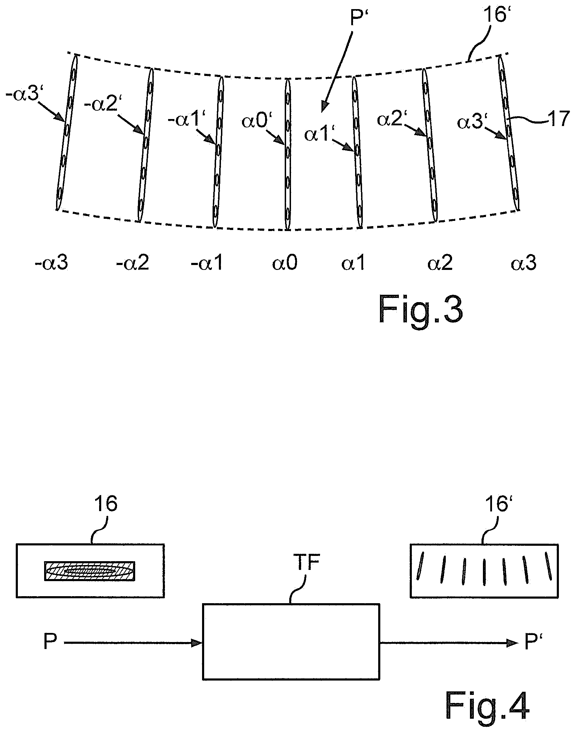

Aus der Sendeeinrichtung 8' gemäß dem Stand der Technik resultiert ein Ist-Sichtfeld 16', welches in Fig. 3 gezeigt ist. Das Ist-Sichtfeld 16' weist eine Ist-Form P' auf und ist im vorliegenden Fall fächerförmig ausgebildet. In Fig. 3 sind dabei Beleuchtungsstreifen 17 für verschiedene Sollwerte -α3, -α2, -α1, α0, +α1, +α2, +α3 des Abtastwinkels α gezeigt. Jeder Beleuchtungsstreifen 17 charakterisiert einen Istwert -α3', -α2', -α1', α0', +α1', +α2', +α3' des Abtastwinkels α entspricht einer von dem Lichtstrahl 10 ausgeleuchtete Spalte auf einer Zielfläche (Target) zu einem jeweiligen Messzeitpunkt, wobei jedem Messzeitpunkt ein Sollwert -α3 bis +α3 für den Abtastwinkel α zugeordnet ist, unter welchem der Lichtstrahl 10 zu diesem Messzeitpunkt ausgesendet werden soll. Idealerweise, also wenn die von der Ablenkeinheit 15' bereitgestellten Istwerte -α3' bis +α3' tatsächlich den Sollwerten -α3 bis +α3 entsprechen, sind die Beleuchtungsstreifen 17 senkrecht orientiert, sodass sich ein Soll-Sichtfeld 16 mit einer rechteckigen Soll-Form P (siehe Fig. 4) bildet. Jedoch ist ersichtlich, dass insbesondere die äußeren Beleuchtungsstreifen 17 bei den Abtastwinkeln -α3 und +α3, welche Ränder des Sichtfeldes 16' bilden, nicht senkrecht orientiert ist, sodass das fächerförmige Ist-Sichtfeld 16' gegenüber dem Soll-Sichtfeld 16 verzerrt ist. Mit steigendem Abtastwinkel α vergrößert sich also auch die Verzerrung des Sichtfeldes 16'.

Fig. 4 ist ein Zusammenhang zwischen der Soll-Form P des Soll-Sichtfeldes 16 und der Ist-Form P' des Ist-Sichtfeldes 16' gezeigt. Dabei ist die Ist-Form P' des Ist-Sichtfeldes 16' über eine Transferfunktion TF mit der Soll-Form P des Soll-Sichtfeldes 16 gemäß der Formel P * TF = P' gekoppelt. Die Transferfunktion TF beschreibt dabei die Verzerrung des Ist-Sichtfeldes 16' bezüglich des Soll-Sichtfeldes 16 beziehungsweise die Abweichung der Istwerte -α3' bis +α3' des Abtastwinkels α von den Sollwerten -α3 bis +α3 des Abtastwinkels α, welche durch den schwenkbaren Spiegel 18 verursacht wird.

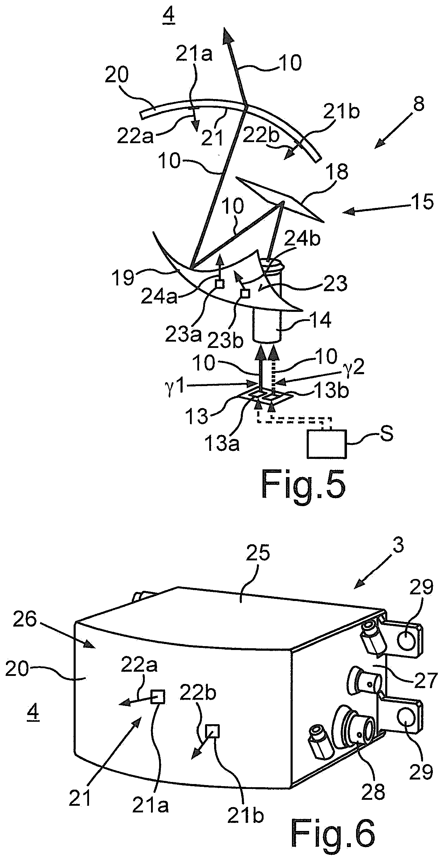

Um nun das Ist-Sichtfeld 16' in das Soll-Sichtfeld 16 zu überführen, wird eine inverse Transferfunktion RTF bestimmt, sodass die Formel P*(TF*RTF)=P beziehungsweise P'*RTF=P gilt. Zum Bereitstellen der inversen Transferfunktion RTF wird für die optische Erfassungsvorrichtung 3 eine Sendeeinrichtung 8 bereitgestellt, wie sie in Fig. 5 gezeigt ist. Die Sendeeinrichtung 8 weist hier eine Lichtquelle 13 auf, welche zumindest zwei Sendeelemente 13a, 13b umfasst. Die Sendeelemente 13a, 13b sind beispielsweise Laserdioden oder LEDs und können separat, beispielsweise von einer Steuereinheit S, zum Aussenden des Lichtstrahls 10 angesteuert werden. Die von den Sendeelementen 13a, 13b ausgesendeten Lichtstrahlen 10 weisen dabei unterschiedliche Richtungen auf, sodass sie mit unterschiedlichen Einfallswinkeln γ1, γ2 auf die Ablenkeinheit 15 auftreffen. Jedem Einfallswinkel γ1, γ2 ist dabei einer der Sollwerte -α3 bis +α3 für den Abtastwinkel α zugeordnet, sodass die Ablenkeinheit den unter dem jeweiligen Einfallswinkel γ1, γ2 einfallenden Lichtstrahl 10 unter den zugehörigen Sollwerten -α3 bis +α3 für den Abtastwinkel α reflektieren kann und somit die Abweichung zwischen den von der Ablenkeinheit 15 erzeugten Istwerten -α3' bis +α3' des Abtastwinkels α und den Sollwerten -α3 bis +α3 des Abtastwinkels α kompensiert werden kann.

Außerdem umfasst die Sendeeinrichtung 8 hier einen Freiformspiegel 19, welcher zusätzlich zu dem schwenkbaren Spiegel 18 in der Ablenkeinheit 15 angeordnet ist, sowie ein Linsenelement 20. Der von der Lichtquelle 13 erzeugte Lichtstrahl 10 wird zunächst auf den schwenkbaren Spiegel 18 ausgesendet, welcher den Lichtstrahl 10 auf den Freiformspiegel 19 reflektiert. Der Freiformspiegel 19 ist dazu ausgelegt, den Lichtstrahl 10 auf das Linsenelement 20 zu reflektieren, welches eine Freiformfläche 21 umfasst. Der Freiformspiegel 19 und das Linsenelement 20 sind dazu ausgelegt, den Lichtstrahl 10 derart in den Umgebungsbereich 4 des Kraftfahrzeugs 1 zu orientieren, dass eine Abweichung zwischen dem Soll-Sichtfeld 16 und dem Ist-Sichtfeld 16' vollständig kompensiert werden kann, falls diese Abweichung nicht durch die Einfallswinkel γ1, γ2 des von den jeweiligen Sendeelementen 13a, 13b ausgesendeten Lichtstrahls 10 kompensiert werden kann. Dazu weisen Oberflächenelemente 21a, 21b der Freiformfläche 21 der Freiformlinse 20 unterschiedliche Neigungswinkel 22a, 22b beziehungsweise Neigungsrichtungen auf. Auch Oberflächenelemente 23a, 23b einer spiegelnden Freiformfläche 23 des Freiformspiegels 19 weisen unterschiedliche Neigungswinkel 24a, 24b auf. Dabei kann jedem Neigungswinkel 22a, 22b, 24a, 24b ein Sollwert -α3 bis +α3 für den Abtastwinkel α zugeordnet sein, sodass das jeweilige Oberflächenelement 21a, 21b des Linsenelementes 20 den Lichtstrahl 10 unter den zugeordneten Sollwerten -α3 bis +α3 für den Abtastwinkel α transmittiert und/oder das jeweilige Oberflächenelement 24a, 24b des Freiformspiegels 19 den Lichtstrahl 10 unter den zugeordneten Sollwerten -α3 bis +α3 für den Abtastwinkel α reflektiert. Die Oberflächenelemente 24a, 24b können also eine Richtung des auf das jeweilige Oberflächenelement 21a, 21 b einfallenden Lichtstrahls 10 verändern. Die Freiformfläche 21, 23 weist die inverse Transferfunktion RTF auf. Anders ausgedrückt wird mittels der Neigungswinkel 22a, 22b, 24a, 24b der Oberflächenelemente 21a, 21b, 23a, 23b der Freiformfläche 21, 23 die inverse Transferfunktion RTF realisiert. Die Neigungswinkel 22a, 22b, 24a, 24b der Oberflächenelemente 21a, 21b, 23a, 23b werden in Abhängigkeit von den Schwenkwinkeln des schwenkbaren Spiegels 18 und damit in Abhängigkeit von den jeweiligen bereitzustellenden Sollwerten -α3 bis +α3 des Abtastwinkels α bestimmt.

Gemäß Fig. 5 wird der Lichtstrahl 10 also von zumindest einem der Sendeelemente 13a, 13b zunächst unter einem zu dem aktuellen Sollwert -α3 bis +α3 für den Abtastwinkel α korrespondierenden Einfallswinkels γ1, γ2 auf den schwenkbaren Spiegel 18 ausgesendet, welcher den Lichtstrahl 10 auf den Freiformspiegel 19 reflektiert. Dieser kann im Falle einer bestehenden Abweichung zwischen den von dem schwenkbaren Spiegel 18 bereitgestellten Istwerten -α3' bis +α3' und den Sollwerten -α3 bis +α3 des Abtastwinkels α die Abweichung zumindest verringern, indem der Lichtstrahl 10 an demjenigen Oberflächenelement 23a, 23b reflektiert wird, welches dem jeweiligen Sollwert -α3 bis +α3 des Abtastwinkels α zugeordnet ist. Der Lichtstrahl 10 wird dabei auf das Linsenelement 20 reflektiert, welches die Orientierung des Lichtstrahls 10 beim Transmittieren verändern kann, falls nach wie vor eine Abweichung zwischen den von dem Freiformspiegel 19 bereitgestellten Istwerten -α3' bis +α3' und den Sollwerten -α3 bis +α3 des Abtastwinkels α besteht. Dazu wird der Lichtstrahl 10 durch dasjenige Oberflächenelement 21a, 21b der Freiformlinse 20 transmittiert, welches mit dem aktuellen Sollwert -α3 bis +α3 des Abtastwinkels α korrespondiert.

In Fig. 6 ist eine Ausführungsform der als Laserscanner ausgebildeten optischen Erfassungsvorrichtung 3 gezeigt. Die optische Erfassungsvorrichtung 3 weist ein Gehäuse 25 auf, welches die Sendeeinrichtung 8 und die Empfangseinrichtung 9 umgibt. Eine im eingebauten Zustand der optischen Erfassungsvorrichtung 3 am Kraftfahrzeug 1 dem Umgebungsbereich 4 zugewandte Frontseite 26 des Gehäuses 25 ist hier durch das Linsenelement 20 mit der Freiformfläche 21 gebildet. Der Lichtstrahl 10 wird hier also von der in einem Innenraum des Gehäuses 25 angeordneten Sendeeinrichtung 8 durch die Freiformlinse 20 hindurch in den Umgebungsbereich 4 transmittiert und der in dem Umgebungsbereich 4 reflektierte Teil 11 des Lichtstrahls 10 wird aus dem Umgebungsbereich 4 zu der in dem Innenraum des Gehäuses 25 angeordneten Empfangseinrichtung 9 transmittiert. Das Gehäuse 25 weist hier in einem Seitenbereich 27 außerdem elektrische Anschlusselemente 28 sowie Befestigungselemente 29 zum Befestigen der optischen Erfassungsvorrichtung 3 am Kraftfahrzeug 1 auf.

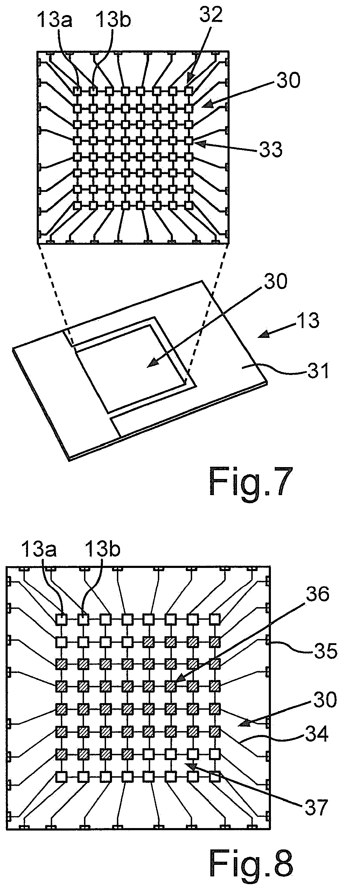

Fig. 7 zeigt eine Ausführungsform der Lichtquelle 13, bei welchem die Sendeelemente 13a, 13b in einer Matrixanordnung 30 angeordnet sind. Die Matrixanordnung 30, bei welcher die Sendeelemente 13a, 13b in Spalten 32 und Zeilen 33 angeordnet sind, ist auf einem Träger 31 der Lichtquelle 13 angeordnet. In Fig. 8 ist zu sehen, dass jede Zeile 33 und jede Spalte 32 über ein Verbindungselement 34, beispielsweise einen Bonddraht, mit einem Kontaktierungselement 35, beispielsweise einem Lötpad, verbunden ist, sodass jedes Sendeelement 13a, 13b separat beziehungsweise individuell über die jeweilige Zeile 33 und die jeweilige Spalte 32, in welcher sich das Sendeelement 13a, 13b befindet, angesprochen werden kann. Das angesprochene Sendeelement 13a, 13b sendet dann den Lichtstrahl 10 aus. Dabei können auf mehrere Sendeelemente 13a, 13b, zum Aussenden des Lichtstrahls 10 angesteuert werden. In Fig 8 ist gezeigt, dass die Sendeelemente 13a, 13b eines Bereiches 36 den Lichtstrahl 10 aussenden, also aktiv sind, während hingegen die Sendeelemente 13a, 13b eines Bereiches 37 nicht aktiv sind. Der Bereich 36 kann beispielsweise immer dann aktiv sein, wenn ein bestimmter Sollwert -α3 bis +α3 des Abtastwinkels α oder ein Sollwert -α3 bis +α3 des Abtastwinkels α aus einem bestimmten Wertebereich erzeugt werden soll. Eine Ansteuerstrategie, wann welche Sendeelemente 13a, 13b zum Aussenden des Lichtstrahls 10 angesteuert beziehungsweise aktiviert werden, kann beispielsweise in Abhängigkeit von der Transferfunktion TF vorgegeben werden und für die Steuereinheit S hinterlegt werden.

## Patentansprüche

1. Sendeeinrichtung (8) für eine optische Erfassungsvorrichtung (3) eines Kraftfahrzeugs (1), welche dazu ausgelegt ist, einen Umgebungsbereich (4) des Kraftfahrzeugs (1) mittels eines Lichtstrahls (10) abzutasten, und welche eine Lichtquelle (13) zum Aussenden des Lichtstrahls (10) und eine Ablenkeinheit (15) aufweist, wobei die Ablenkeinheit (15) dazu ausgelegt ist, den von der Lichtquelle (13) auf die Ablenkeinheit (15) ausgesendeten Lichtstrahl (10) unter unterschiedlichen Abtastwinkeln (α) abzulenken, wobei
die Lichtquelle (13) zum Aussenden des Lichtstrahls (10) zumindest zwei separat ansteuerbare Sendeelemente (13a, 13b) aufweist, welche dazu ausgelegt sind, den Lichtstrahl (10) zum Erzeugen eines vorbestimmten Soll-Sichtfeldes (16) der Sendeeinrichtung (8) unter mit vorbestimmten Sollwerten (-α3, -α2, -α1, α0, +α1, +α2, +α3) des Abtastwinkels (α) korrespondierenden Einfallswinkeln (γ1, γ2) auf die Ablenkeinheit (15) auszusenden und wobei
die Ablenkeinheit (15) einen schwenkbaren Spiegel (18) aufweist, welcher dazu ausgelegt ist, den von dem jeweiligen Sendeelement (13a, 13b) ausgesendeten Lichtstrahl (10) unter dem zu dem jeweiligen Einfallswinkel (γ1, γ2) korrespondierenden Sollwert (-α3, -α2, -α1, α0, +α1, +α2, +α3) für den Abtastwinkel (α) abzulenken,
**dadurch gekennzeichnet, dass**
die von den Sendeelementen (13a, 13b) bereitgestellten Einfallswinkel (γ1, γ2) des Lichtstrahls (10) in Abhängigkeit von Schwenkwinkeln des schwenkbaren Spiegels (18) vorgegeben sind.

2. Sendeeinrichtung (8) nach Anspruch 1,
**dadurch gekennzeichnet, dass**
eine Ebene des mittels der Sollwerte (-α3, -α2, -α1, α0, +α1, +α2, +α3) für den Abtastwinkel (α) erzeugten Soll-Sichtfeldes (16) senkrecht zu einer Hauptabtastrichtung der Sendeeinrichtung (8) rechteckförmig ausgebildet ist.

3. Sendeeinrichtung (8) nach Anspruch 1 oder 2,
**dadurch gekennzeichnet, dass**
die Sendeeinrichtung (8) eine Steuereinheit (S) aufweist, welche dazu ausgelegt ist, für Sollwerte (-α3, -α2, -α1, α0, +α1, +α2, +α3) des Abtastwinkels (α) aus einem ersten Wertebereich zumindest ein erstes der Sendeelemente (13a, 13b) zum Aussenden des Lichtstrahls (10) anzusteuern und für Sollwerte (-α3, -α2, -α1, α0, +α1, +α2, +α3) des Abtastwinkels (α) aus einem zweiten Wertebereich zumindest ein zweites der Sendeelemente (13a, 13b) zum Aussenden des Lichtstrahls (10) anzusteuern.

4. Sendeeinrichtung (8) nach einem der vorhergehenden Ansprüche
**dadurch gekennzeichnet, dass**
die Lichtquelle (13) eine Matrixanordnung (30) von separat ansteuerbaren Sendeelementen (13a, 13b) aufweist.

5. Sendeeinrichtung (8) nach Anspruch 4,
**dadurch gekennzeichnet, dass**
jedem Sollwert (-α3, -α2, -α1, α0, +α1, +α2, +α3) für den Abtastwinkel (α) eine bestimmte Anzahl an Sendeelementen (13a, 13b), welche in der Matrixanordnung (30) eine bestimmte Position aufweisen, zugeordnet ist.

6. Sendeeinrichtung (8) nach Anspruch 1,
**dadurch gekennzeichnet, dass**
der schwenkbare Spiegel (18) eine charakteristische Transferfunktion (TF) aufweist, durch welche eine Verzerrung eines durch den schwenkbaren Spiegel (18) erzeugten Ist-Sichtfeldes (16') bezüglich des Soll-Sichtfeldes (16) in Abhängigkeit von den Schwenkwinkeln des schwenkbaren Spiegels (16) beschrieben ist, und die die Sendeelemente (13a, 13b) zum Bereitstellen des jeweiligen Einfallswinkels (γ1, γ2) des Lichtstrahls (10) derart angeordnet sind, dass durch den Einfallswinkel (γ1, γ2) eine Inverse (RTF) der charakteristischen Transferfunktion bereitgestellt ist.

7. Sendeeinrichtung (8) nach Anspruch 6,
**dadurch gekennzeichnet, dass**
die Verzerrung anhand von einer Abweichung von Formen (P', P) von Ebenen des Ist-Sichtfeldes (16') und des Soll-Sichtfeldes (16) senkrecht zu einer Hauptabtastrichtung der Sendeeinrichtung (8) bestimmt ist.

8. Sendeeinrichtung (8) nach einem der Ansprüche 1, 6 oder 7,
**dadurch gekennzeichnet, dass**
die Ablenkeinheit (15) zusätzlich einen Freiformspiegel (19) mit einer spiegelnden Freiformfläche (23) zum Reflektieren des von dem schwenkbaren Spiegel (18) reflektieren Lichtstrahls (10) aufweist, wobei der Freiformspiegel (19) dazu ausgelegt ist, eine Abweichung eines von dem schwenkbaren Spiegel (18) erzeugten Istwertes (-α3', -α2', -α1', α0', +α1', +α2', +α3') für den Abtastwinkel (α) von dem Sollwert (-α3, -α2, -α1, α0, +α1, +α2, +α3) für den Abtastwinkel (α) zu kompensieren.

9. Sendeeinrichtung (8) nach einem der vorhergehenden Ansprüche,
**dadurch gekennzeichnet, dass**
die Sendeeinrichtung (8) zusätzlich ein Linsenelement (20) mit einer Freiformfläche (21) zum Transmittieren des von der Ablenkeinheit (15) abgelenkten Lichtstrahls (10) in den Umgebungsbereich (4) aufweist, wobei das Linsenelement (20) dazu ausgelegt ist, eine Abweichung eines von der Ablenkeinheit (15) erzeugten Istwertes (-α3', -α2', -α1', α0', +α1', +α2', +α3') von dem Sollwert (-α3, -α2, -α1, α0, +α1, +α2, +α3) für den Abtastwinkel (α) zu kompensieren.

10. Sendeeinrichtung (8) nach Anspruch 8 oder 9,
**dadurch gekennzeichnet, dass**
Neigungswinkel (22a, 22b, 24a, 24b) von Oberflächenelementen (21a, 21b, 23a, 23b) der Freiformfläche (21, 23) mit den Sollwerten (-α3, -α2, -α1, α0, +α1, +α2, +α3) für den Abtastwinkel (α) korrespondierend vorgegeben sind, wobei jedem Sollwert (-α3, -α2, -α1, α0, +α1, +α2, +α3) für den Abtastwinkel (α) ein Oberflächenelement (21a, 21b, 23a, 23b) zum Ablenken des Lichtstrahls (10) unter dem jeweiligen Sollwert (-α3, -α2, -α1, α0, +α1, +α2, +α3) für den Abtastwinkel (α) zugeordnet ist.

11. Optische Erfassungsvorrichtung (3), insbesondere Laserscanner, für ein Kraftfahrzeug (1) zum Überwachen eines Umgebungsbereiches (4) des Kraftfahrzeugs (1), mit einer Sendeeinrichtung (8) nach einem der vorhergehenden Ansprüche und einer Empfangseinrichtung (9), wobei die Empfangseinrichtung (9) dazu ausgelegt ist, einen an einem Objekt (O) in dem Umgebungsbereich (4) reflektierten Teil (11) des Lichtstrahls (10) zu empfangen und anhand einer Zeitdauer zwischen dem Aussenden des Lichtstrahls (10) und dem Empfangen des reflektierten Teils (11) des Lichtstrahls (10) einen Abstand des Objektes (O) zu dem Kraftfahrzeug (1) zu bestimmen.

12. Kraftfahrzeug (1) mit zumindest einer optischen Erfassungsvorrichtung (3) nach Anspruch 11.

13. Verfahren zum Erzeugen eines Soll-Sichtfeldes (16) für eine Sendeeinrichtung (8) einer optischen Erfassungsvorrichtung (3) eines Kraftfahrzeugs (1), wobei für die Sendeeinrichtung (8) eine Lichtquelle (13) zum Aussenden des Lichtstrahls (10) und eine Ablenkeinheit (15) bereitgestellt wird, wobei mittels der Ablenkeinheit (15) ein von der Lichtquelle (13) auf die Ablenkeinheit (15) ausgesendeter Lichtstrahl (10) unter unterschiedlichen Abtastwinkeln (α) abgelenkt wird, wobei zumindest zwei separat ansteuerbare Sendeelemente (13a, 13b) zum Aussenden des Lichtstrahls (10) für die Lichtquelle (13) bereitgestellt werden, wobei die Sendeelemente (13a, 13b) den Lichtstrahl (10) zum Erzeugen eines vorbestimmten Soll-Sichtfeldes (16) der Sendeeinrichtung (8) unter mit vorbestimmten Sollwerten (-α3, -α2, -α1, α0, +α1, +α2, +α3) des Abtastwinkels (α) korrespondierenden Einfallswinkeln (γ1, γ2) auf die Ablenkeinheit (15) aussenden, wobei für die Ablenkeinheit (15) ein schwenkbarer Spiegel (18) bereitgestellt wird und wobei der von dem jeweiligen Sendeelement (13a, 13b) ausgesendete Lichtstrahl (10) unter dem zu dem jeweiligen Einfallswinkel (γ1, γ2) korrespondierenden Sollwert (-α3, -α2, -α1, α0, +α1, +α2, +α3) für den Abtastwinkel (α) abgelenkt wird,
**dadurch gekennzeichnet, dass**
die von den Sendeelementen (13a, 13b) bereitgestellten Einfallswinkel (γ1, γ2) des Lichtstrahls (10) in Abhängigkeit von Schwenkwinkeln des schwenkbaren Spiegels (18) vorgegeben werden.

## Claims

1. Transmitter device (8) for an optical detection apparatus (3) of a motor vehicle (1), which is configured in order to scan a surrounding region (4) of the motor vehicle (1) by means of a light beam (10) and which comprises a light source (13) for emitting the light beam (10) and a deflecting unit (15), the deflecting unit (15) being configured in order to deflect the light beam (10) emitted onto the deflecting unit (15) by the light source (13) at different scanning angles (α), wherein
the light source (13) for emitting the light beam (10) comprises at least two separately driveable transmitter elements (13a, 13b), which are configured in order to emit the light beam (10) onto the deflecting unit (15) at angles of incidence (γ1, γ2) corresponding to predetermined setpoint values (-α3, -α2, -α1, α0, +α1, +α2, +α3) of the scanning angle (α) in order to generate a predetermined setpoint field of view (16) of the transmitter device (8) and wherein
the deflecting unit (15) comprises a tiltable mirror (18), which is configured in order to deflect the light beam (10) emitted by the respective transmitter element (13a, 13b) at the setpoint value (-α3, -α2, -α1, α0, +α1, +α2, +α3) for the scanning angle (α) which corresponds to the respective angle of incidence (γ1, γ2),
**characterized in that**
the angles of incidence (γ1, γ2) of the light beam (10), which are provided by the transmitter elements (13a, 13b), are predetermined as a function of tilt angles of the tiltable mirror (18).

2. Transmitter device (8) according to Claim 1,
**characterized in that**
a plane of the setpoint field of view (16), generated by means of the setpoint values (-α3, -α2, -α1, α0, +α1, +α2, +α3) for the scanning angle (α), is shaped rectangularly perpendicular to a principal scanning direction of the transmitter device (8).

3. Transmitter device (8) according to Claim 1 or 2,
**characterized in that**
the transmitter device (8) comprises a control unit (S), which is configured in order to drive at least a first of the transmitter elements (13a, 13b) to emit the light beam (10) for setpoint values (-α3, -α2, -α1, α0, +α1, +α2, +α3) of the scanning angle (α) from a first value range, and in order to drive at least a second of the transmitter elements (13a, 13b) to emit the light beam (10) for setpoint values (-α3, -α2, -α1, α0, +α1, +α2, +α3) of the scanning angle (α) from a second value range.

4. Transmitter device (8) according to any one of the preceding claims,
**characterized in that**
the light source (13) comprises a matrix arrangement (30) of separately driveable transmitter elements (13a, 13b).

5. Transmitter device (8) according to Claim 4,
**characterized in that**
each setpoint value (-α3, -α2, -α1, α0, +α1, +α2, +α3) for the scanning angle (α) is assigned a particular number of transmitter elements (13a, 13b), which have a particular position in the matrix arrangement (30).

6. Transmitter device (8) according to Claim 1,
**characterized in that**
the tiltable mirror (18) has a characteristic transfer function (TF), by which a distortion of an actual field of view (16') generated by the tiltable mirror (16) with respect to the setpoint field of view (16) is described as a function of the tilt angles of the tiltable mirror (18), and the transmitter elements (13a, 13b) for providing the respective angle of incidence (γ1, γ2) of the light beam (10) are arranged in such a way that an inverse (RTF) of the characteristic transfer function is provided by the angle of incidence (γ1, γ2).

7. Transmitter device (8) according to Claim 6,
**characterized in that**
the distortion is determined on the basis of a deviation of shapes (P', P) of planes of the actual field of view (16') and of the setpoint field of view (16) perpendicular to a principal scanning direction of the transmitter device (8).

8. Transmitter device (8) according to any one of Claims 1, 6 and 7,
**characterized in that**
the deflecting unit (15) additionally comprises a freeform mirror (19) having a reflective freeform face (23) for reflecting the light beam (10) reflected by the tiltable mirror (18), the freeform mirror (19) being configured in order to compensate for a deviation of an actual value (-α3', -α2', -α1', α0', +α1', +α2', +α3') for the scanning angle (α), generated by the tiltable mirror (18), from the setpoint value (-α3, -α2, -α1, α0, +α1, +α2, +α3) for the scanning angle (α).

9. Transmitter device (8) according to any one of the preceding claims,
**characterized in that**
the transmitter device (8) additionally comprises a lens element (20) having a freeform face (21) for transmitting the light beam (10) deflected by the deflecting unit (15) into the surrounding region (4), the lens element (20) being configured in order to compensate for a deviation of an actual value (-α3', -α2', -α1', α0', +α1', +α2', +α3'), generated by the deflecting unit (15), from the setpoint value (-α3, -α2, -α1, α0, +α1, +α2, +α3) for the scanning angle (α).

10. Transmitter device (8) according to Claim 8 or 9,
**characterized in that**
angles of inclination (22a, 22b, 24a, 24b) of surface elements (21a, 21b, 23a, 23b) of the freeform face (21, 23), corresponding to the setpoint values (-α3, -α2, -α1, α0, +α1, +α2, +α3) for the scanning angle (α), are predetermined, each setpoint value (-α3, -α2, -α1, α0, +α1, +α2, +α3) for the scanning angle (α) being assigned a surface element (21a, 21b, 23a, 23b) for deflecting the light beam (10) at the respective setpoint value (-α3, -α2, -α1, α0, +α1, +α2, +α3) for the scanning angle (α).

11. Optical detection apparatus (3), in particular laser scanner, for a motor vehicle (1), for monitoring a surrounding region (4) of the motor vehicle (1), having a transmitter device (8) according to any one of the preceding claims and a receiver device (9), the receiver device (9) being configured in order to receive a part (11) of the light beam (10), reflected at an object (O) in the surrounding region (4), and in order to determine a distance of the object (O) from the motor vehicle (1) on the basis of a time period between the emission of the light beam (10) and the reception of the reflected part (11) of the light beam (10).

12. Motor vehicle (1) having at least one optical detection apparatus (3) according to Claim 11.

13. Method for generating a setpoint field of view (16) for a transmitter device (8) of an optical detection apparatus (3) of a motor vehicle (1), a light source (13) for emitting the light beam (10) and a deflecting unit (15) being provided for the transmitter device (8), a light beam (10) emitted onto the deflecting unit (15) by the light source (13) being deflected at different scanning angles (α) by means of the deflecting unit (15), wherein at least two separately driveable transmitter elements (13a, 13b) for emitting the light beam (10) are provided for the light source (13), the transmitter elements (13a, 13b) emitting the light beam (10) onto the deflecting unit (15) at angles of incidence (γ1, γ2) corresponding to predetermined setpoint values (-α3, -α2, -α1, α0, +α1, +α2, +α3) of the scanning angle (α) in order to generate a predetermined setpoint field of view (16) of the transmitter device (8), a tiltable mirror (18) being provided for the deflecting unit (15) and the light beam (10) emitted by the respective transmitter element (13a, 13b) being deflected at the setpoint value (-α3, -α2, -α1, α0, +α1, +α2, +α3) for the scanning angle (α) which corresponds to the respective angle of incidence (γ1, γ2),
**characterized in that**
the angles of incidence (γ1, γ2) of the light beam (10), which are provided by the transmitter elements (13a, 13b), are predetermined as a function of tilt angles of the tiltable mirror (18).

## Revendications

1. Dispositif d'émission (8) pour un arrangement de détection optique (3) d'un véhicule automobile (1), lequel est conçu pour balayer une zone environnante (4) du véhicule automobile (1) au moyen d'un rayon lumineux (10), et lequel possède une source de lumière (13) destinée à émettre le rayon lumineux (10) et une unité de déviation (15), l'unité de déviation (15) étant conçue pour dévier le rayon lumineux (10) émis par la source de lumière (13) sur l'unité de déviation (15) sous différents angles de balayage (α),
la source de lumière (13) possédant au moins deux éléments émetteurs (13a, 13b) commandables séparément pour émettre le rayon lumineux (10), lesquels sont conçus pour émettre le rayon lumineux (10) sur l'unité de déviation (15) sous des angles d'incidence (γ1, γ2) correspondant à des valeurs de consigne (-α3, -α2, -α1, α0, +α1, +α2, +α3) prédéterminées de l'angle de balayage (α) en vue de générer un champ de vision de consigne (16) du dispositif d'émission (8) et
l'unité de déviation (15) possédant un miroir pivotant (18) qui est conçu pour dévier le rayon lumineux (10) émis par l'élément émetteur (13a, 13b) respectif sous la valeur de consigne (-α3, -α2, -α1, α0, +α1, +α2, +α3) de l'angle de balayage (α) correspondant à l'angle d'incidence (γ1, γ2) respectif,
**caractérisé en ce que**
les angles d'incidence (γ1, γ2) du rayon lumineux (10) fournis par les éléments émetteurs (13a, 13b) sont prédéfinis en fonction des angles de pivotement du miroir pivotant (18).

2. Dispositif d'émission (8) selon la revendication 1, **caractérisé en ce qu'**un plan du champ de vision de consigne (16) généré au moyen des valeurs de consigne (-α3, -α2, -α1, α0, +α1, +α2, +α3) de l'angle de balayage (α) est configuré de forme rectangulaire perpendiculaire à une direction de balayage principale du dispositif d'émission (8).

3. Dispositif d'émission (8) selon la revendication 1 ou 2, **caractérisé en ce que** le dispositif d'émission (8) possède une unité de commande (S) qui est conçue pour commander au moins un premier des éléments émetteurs (13a, 13b) en vue de l'émission du rayon lumineux (10) pour des valeurs de consigne (-α3, -α2, -α1, α0, +α1, +α2, +α3) de l'angle de balayage (α) d'une première plage de valeurs et pour commander au moins un deuxième des éléments émetteurs (13a, 13b) en vue de l'émission du rayon lumineux (10) pour des valeurs de consigne (-α3, - α2, -α1, α0, +α1, +α2, +α3) de l'angle de balayage (α) d'une deuxième plage de valeurs.

4. Dispositif d'émission (8) selon l'une des revendications précédentes, **caractérisé en ce que** la source de lumière (13) possède un arrangement matriciel (30) d'éléments émetteurs (13a, 13b) commandables séparément.

5. Dispositif d'émission (8) selon la revendication 4, **caractérisé en ce qu'**un certain nombre d'éléments émetteurs (13a, 13b), qui possèdent une position déterminée dans l'arrangement matriciel (30), est associé à chaque valeur de consigne (-α3, -α2, -α1, α0, +α1, +α2, +α3) de l'angle de balayage (α).

6. Dispositif d'émission (8) selon la revendication 1, **caractérisé en ce que** le miroir pivotant (18) possède une fonction de transfert (TF) caractéristique par laquelle est décrite une déformation d'image d'un champ de vision réel (16') généré par le miroir pivotant (18) en référence au champ de vision de consigne (16) en fonction des angles de pivotement du miroir pivotant (16), et ceux des éléments émetteurs (13a, 13b) destinés à fournir l'angle d'incidence (γ1, γ2) respectif du rayon lumineux (10) sont disposés de telle sorte qu'un inverse (RTF) de la fonction de transfert caractéristique est fourni par l'angle d'incidence (γ1, γ2).

7. Dispositif d'émission (8) selon la revendication 6, **caractérisé en ce que** la déformation d'image est déterminée à l'aide d'un écart de formes (P', P) de plans du champ de vision réel (16') et du champ de vision de consigne (16) perpendiculairement à une direction de balayage principale du dispositif d'émission (8).

8. Dispositif d'émission (8) selon l'une des revendications 1, 6 et 7, **caractérisé en ce que** l'unité de déviation (15) possède en outre un miroir à forme libre (19) ayant une surface réfléchissante à forme libre (23) destinée à réfléchir le rayon lumineux (10) réfléchi par le miroir pivotant (18), le miroir à forme libre (19) étant conçu pour compenser un écart d'une valeur réelle (-α3', -α2', -α1', α0', +α1', +α2', +α3') de l'angle de balayage (α) générée par le miroir pivotant (18) par rapport à la valeur de consigne (-α3, -α2, -α1, α0, +α1, +α2, +α3) de l'angle de balayage (α).

9. Dispositif d'émission (8) selon l'une des revendications précédentes, **caractérisé en ce que** l'unité d'émission (8) possède en outre un élément formant lentille (20) ayant une surface à forme libre (21) destinée à transmettre le rayon lumineux (10) dévié par l'unité de déviation (15) dans la zone environnante (4), l'élément formant lentille (20) étant conçu pour compenser un écart d'une valeur réelle (-α3', -α2', -α1', α0', +α1', +α2', +α3') générée par l'unité de déviation (15) par rapport à la valeur de consigne (-α3, -α2, -α1, α0, +α1, +α2, +α3) de l'angle de balayage (α).

10. Dispositif d'émission (8) selon la revendication 8 ou 9, **caractérisé en ce que** les angles d'inclinaison (22a, 22b, 24a, 24b) d'éléments de surface (21a, 21b, 23a, 23b) de la surface à forme libre (21, 23) sont prédéfinis en correspondance avec les valeurs de consigne (-α3, -α2, - α1, α0, +α1, +α2, +α3) de l'angle de balayage (α), un élément de surface (21a, 21b, 23a, 23b) destiné à dévier le rayon lumineux (10) sous la valeur de consigne (-α3, -α2, -α1, α0, +α1, +α2, +α3) respective de l'angle de balayage (α) étant associé à chaque valeur de consigne (-α3, -α2, -α1, α0, +α1, +α2, +α3) de l'angle de balayage (α) .

11. Arrangement de détection optique (3), notamment système de balayage à laser, pour un véhicule automobile (1) destiné à surveiller une zone environnante (4) du véhicule automobile (1), comprenant un dispositif d'émission (8) selon l'une des revendications précédentes et un dispositif de réception (9), le dispositif de réception (9) étant conçu pour recevoir une partie (11) du rayon lumineux (10) réfléchie sur un objet (O) dans la zone environnante (4) et pour déterminer une distance de l'objet (O) par rapport au véhicule automobile (1) à l'aide d'une durée entre l'émission du rayon lumineux (10) et la réception de la partie (11) réfléchie du rayon lumineux (10).

12. Véhicule automobile (1) comprenant au moins un arrangement de détection optique (3) selon la revendication 11.

13. Procédé pour générer un champ de vision de consigne (16) pour un dispositif d'émission (8) d'un arrangement de détection optique (3) d'un véhicule automobile (1), une source de lumière (13) destinée à émettre le rayon lumineux (10) et une unité de déviation (15) étant fournies pour le dispositif d'émission (8), un rayon lumineux (10) émis par la source de lumière (13) sur l'unité de déviation (15) étant dévié sous différents angles de balayage (α) par l'unité de déviation (15),
au moins deux éléments émetteurs (13a, 13b) commandables séparément pour émettre le rayon lumineux (10) étant fournis pour la source de lumière (13), les éléments émetteurs (13a, 13b) émettant le rayon lumineux (10) sur l'unité de déviation (15) sous des angles d'incidence (γ1, γ2) correspondant à des valeurs de consigne (-α3, -α2, -α1, α0, +α1, +α2, +α3) prédéterminées de l'angle de balayage (α) en vue de générer un champ de vision de consigne (16) du dispositif d'émission (8), un miroir pivotant (18) étant fourni pour l'unité de déviation (15) et le rayon lumineux (10) émis par l'élément émetteur (13a, 13b) respectif étant dévié sous la valeur de consigne (-α3, -α2, -α1, α0, +α1, +α2, +α3) de l'angle de balayage (α) correspondant à l'angle d'incidence (γ1, γ2) respectif,
**caractérisé en ce que**
les angles d'incidence (γ1, γ2) du rayon lumineux (10) fournis par les éléments émetteurs (13a, 13b) sont prédéfinis en fonction des angles de pivotement du miroir pivotant (18).
